# EUROPÄISCHE PATENTSCHRIFT

(11) **EP 1 093 977 B1**
(45) Veröffentlichungstag und Bekanntmachung des Hinweises auf die Patenterteilung: **23.07.2003**
(21) Anmeldenummer: 00122310.6
(22) Anmeldetag: 20.10.2000
(51) Int. Cl.: B60R 21/20, B60R 16/00

(54) **Fahrzeuglenkrad**
Vehicle steering wheel
Volant de véhicule

(30) Priorität: 21.10.1999 DE 29918483 U
(43) Veröffentlichungstag der Anmeldung: 25.04.2001
(73) Patentinhaber: TRW Automotive Safety Systems GmbH, 63743 Aschaffenburg (DE)
(72) Erfinder: Derrick, John-Oliver, 97265 Hettstadt (DE); Frisch, Ralph, 63776 Mömbris (DE)
(74) Vertreter: Kitzhofer, Thomas, Dipl.-Ing.

(56) Entgegenhaltungen:
- US-A- 5 957 489

## Beschreibung

Die Erfindung betrifft ein Fahrzeuglenkrad, mit einem Schalter, der am Lenkrad beweglich gelagert ist, mit einer Lagerung für den Schalter, die ein Führungsteil und ein das Führungsteil umschließendes Lagerungsteil hat, wie aus US-A-5957489 bekannt ist.

Fahrzeuglenkräder werden zunehmend mit Schaltern belegt, wobei der flächenmäßig größte Schalter der Hupenschalter ist.

Insbesondere beim Hupenschalter wird angestrebt, daß dieser nach Überwindung der üblicherweise vorgesehenen Vorspannung leicht beweglich ist.

Die Erfindung schafft ein Fahrzeuglenkrad, bei dem die Reibung bei der Bewegung des Führungsteils zum Lagerungsteil gering gehalten wird. Dies wird bei einem Fahrzeuglenkrad der eingangs genannten Art dadurch erreicht, daß das Führungsteil ein freies Ende mit einem sich zum freien Ende, quer zur Bewegungsrichtung des Schalters nach außen erweiternden Konus aufweist, wobei das Ende in der unbetätigten Schalterstellung einen Endanschlag bildet und am Lagerungsteil anliegt. Durch das konusförmige Ende, das den Schalter in seine Endstellung in Richtung entgegen der Bewegungsrichtung hält, wird erreicht, daß bei minimaler Betätigung des Schalters sich das Ende vom Lagerungsteil vollständig löst und so gut wie keine Reibung mehr zwischen Lagerungsteil und Führungsteil vorhanden ist. Auch ein Verkanten von Führungsteil und Lagerungsteil kann verhindert werden, wie dies bei einem zylinderförmigen freien Ende, das in einer zylindrischen Hülse gelagert ist, auftreten könnte.

Vorzugsweise hat das Lagerungsteil ebenfalls eine konusförmige Anlagefläche, an der der Konus anliegt, was zu einem unmittelbaren, schnellen Lösen der aneinander anliegenden Flächen bei der Betätigung führt.

Die vollflächige Anlage im Endanschlag wird dadurch erreicht, daß die Anlagefläche des Lagerungsteils komplementär zum konusförmigen Endanschlag ausgebildet ist.

Vorzugsweise ist quer zur Bewegungsrichtung ein Spiel zwischen dem Lagerungsteil und dem Endanschlag vorgesehen, das sicherstellen soll, daß tatsächlich unmittelbar nach der Betätigung ein Kontakt zwischen Führungsteil und Lagerungsteil vermieden wird.

Der Schalter ist vorzugsweise an einem Gassack-Modulgehäuse gelagert, und zwar so vollständig gelagert, daß Schalter und Gassack-Modulgehäuse eine separate vormontierte Einheit bilden, die dann in das vorzugsweise umschäumte Lenkradskelett eingesetzt wird.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 einen Halbschnitt durch ein erfindungsgemäßes Lenkrad und
Figur 2 eine Schnittansicht einer Variante des in Fig. 1 verwendeten Schalters.

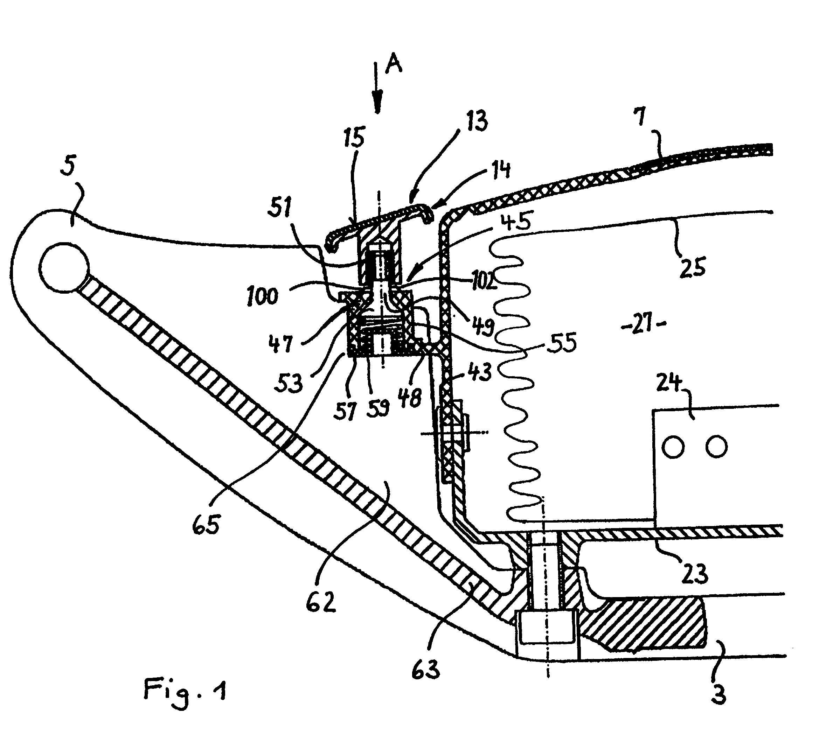

In Figur 1 ist ein Fahrzeuglenkrad dargestellt, das eine Lenkradnabe 3 und einen Lenkradkranz 5 aufweist. In der Lenkradnabe ist im unteren Bereich eine einstückig mit dem Lenkradkranz vorgesehene, vorderseitige Modulabdeckung 7 dargestellt. An der Lenkradnabe sind mehrere Schalter befestigt, zum Beispiel zur Telefon- oder Radiobetätigung, sowie ein Hupenschalter 13. Der Hupenschalter hat ein von außen berührbares Betätigungselement 14 mit einer äußeren Betätigungsfläche 15. Die Abdeckung 7 ist das Oberteil 43 eines Gassack-Modulgehäuses 23, in dem ein Gasgenerator 24 und ein Gassack 25 untergebracht sind. Zur Vorderseite hin steht die Betätigungsfläche 15 des Hupenschalters 13 geringfügig gegenüber der Modulabdeckung 7 vor. Der Hupenschalter 13 ist von der Abdeckung bewegungsentkoppelt. Das Innere des Gassack-Modulgehäuses 23 bildet einen Aufnahmeraum 27 für Gasgenerator 24 und Gassack 25.

Im Bereich des oberen Randes der Betätigungsfläche 15, seitlich des Aufnahmeraums 27 und am Oberteil 43 des Gassack-Modulgehäuses 23 sind zwei gleiche Linearlagerungen 45 vorgesehen, von denen nur die vordere gezeigt ist und die beide am Betätigungselement 14 befestigt sind. Die Linearlagerungen 45 bestehen jeweils aus einem Lagerungsteil 47 in Form eines einstückig an der Abdeckung, genauer am Oberteil 43 angeformten hutförmigen seitlichen Fortsatzes 48 und einem durch das Lagerungsteil hindurchragenden, an der Unterseite der Betätigungsfläche 15 angeschraubten Führungsteils 49. Das Führungsteil 49 hat ein oberes Ende mit einem Gewinde, welches in eine Gewindebuchse 51 in dem Betätigungselement 14 eingeschraubt ist. Darüber hinaus hat das Führungsteil 49 ein entgegengesetztes, unteres freies Ende 53 mit einem sich zum freien Ende quer zur Bewegungsrichtung A des Hupenschalters nach außen erweiternden Konus. Das konusförmige Ende 53 liegt an einer komplementär ausgeführten Anlagefläche am Lagerungsteil in der unbetätigten Schalterstellung gemäß Figur 1 vollflächig an. Zwischen dem größten Querschnitt des konusförmigen Endes 53 und einer Umfangswand 55 des Lagerungsteils besteht Spiel. Auf der Unterseite der Umfangswand 55 ist ein Deckel 57 am Lagerungsteil 47 angebracht, so daß zwischen der Unterseite des freien Endes 53 und dem Deckel 57 ein Raum zur Unterbringung einer Druckfeder 59 entsteht.

Zur Montage des Hupenschalters 13 wird von unten das stiftartige Führungsteil 49 durch das Lagerungsteil 47 gesteckt und in die Gewindebuchse 51 geschraubt. Anschließend wird die Druckfeder 49 in den zugehörigen Raum gedrückt und der Raum mit dem Deckel 57 verschlossen.

Der Hupenschalter 13 ist nun vollständig am Modulgehäuse 23 gelagert. Die so gebildete Einheit wird schließlich von oben in das umschäumte Lenkradskelett 63 gesteckt und über nicht gezeigte Befestigungsmittel an ihm lösbar angebracht. Im Bereich der Lenkradnabe ist die Umschäumung 62 des Lenkradskeletts 63 mit einer entsprechenden Ausnehmung 65 versehen, die das Einschieben des Lagerungsteils 47 samt Deckel 57 von oben erlaubt.

Die Druckfeder 59 sorgt für eine definierte unbetätigte Schalterstellung, indem sie das Führungsteil mit seinem konusförmigen Ende, welches einen Endanschlag bildet, gegen die Anlagefläche des Lagerteils 47 drückt.

Bei der Betätigung des Hupenschalters 13 löst sich das konusförmige Ende 53 sofort vollständig von dem Lagerungsteil 47, so daß kein Verkanten und keine Haftreibung auftritt und der Hupenschalter leicht gegen einen gleichmäßigen Druck betätigt werden kann. Das Hupensignal ertönt, sobald die metallene Gewindebuchse 51 zwei elektrische Kontakte 100 und 102 verbindet.

Wird der Gasgenerator betätigt, entfaltet sich der Gassack 25 und reißt die vorderseitige Modulabdeckung 7 auf.

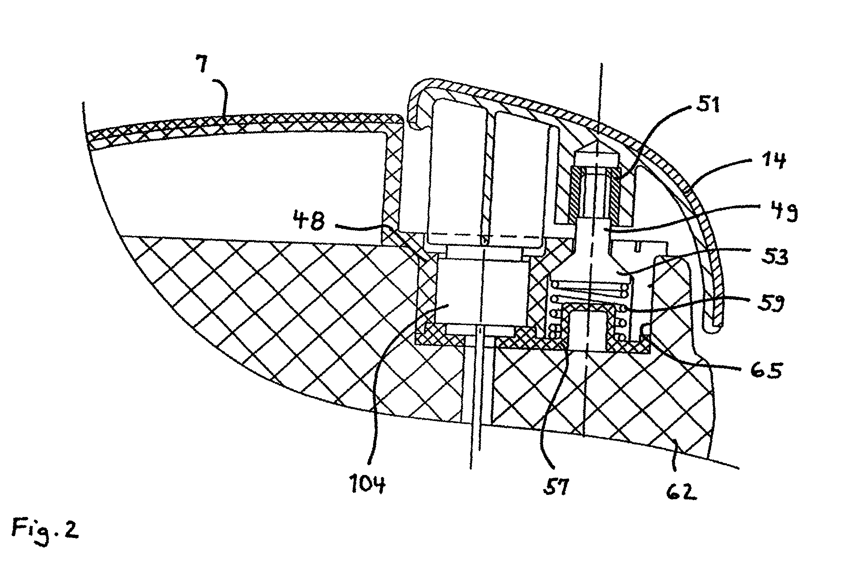

Bei der Ausführungsform nach Figur 2 hat der Schalter 13 anstatt der Kontakte 100, 102 ein elektrisches Schaltglied, das von der Rückseite des Betätigungselements 14 betätigt wird. Das Schaltglied 104 ist in eine Ausnehmung im Fortsatz 48 formschlüssig eingebettet.

## Patentansprüche

1. Fahrzeuglenkrad, mit
einem Schalter (13), der am Lenkrad beweglich gelagert ist,
mit einer Lagerung für den Schalter, die ein Führungsteil (49) und ein das Führungsteil (49) umschließendes Lagerungsteil (47) hat,
**dadurch gekennzeichnet, daß**
das Führungsteil (49) ein freies Ende (53) mit einem sich zum freien Ende (53), quer zur Bewegungsrichtung (A) des Schalters (13) nach außen erweiternden Konus hat, wobei das freie Ende (53) einen Endanschlag in der unbetätigten Schalterstellung bildet und am Lagerungsteil (47) anliegt.

2. Fahrzeuglenkrad nach Anspruch 1, **dadurch gekennzeichnet, daß** das Lagerungsteil (47) eine konusförmige Anlagefläche für das konusförmige Ende (53) hat.

3. Fahrzeuglenkrad nach Anspruch 2, **dadurch gekennzeichnet, daß** die Anlagefläche komplementär zum konusförmigen Ende (53) ist.

4. Fahrzeuglenkrad nach einem der vorhergehenden Ansprüche, **dadurch gekennzeichnet, daß** das Lagerungsteil (47) quer zur Bewegungsrichtung (A) Spiel gegenüber dem konusförmigen Ende (53) bei Betätigung des Schalters (13) aufweist.

5. Fahrzeuglenkrad nach einem der vorhergehenden Ansprüche, **dadurch gekennzeichnet, daß** das Führungsteil (49) an seinem dem konusförmigen Ende (53) entgegengesetzten Ende ein Gewinde aufweist.

6. Fahrzeuglenkrad nach einem der vorhergehenden Ansprüche, **dadurch gekennzeichnet, daß** der Schalter (13) an einem Gassackmodulgehäuse (23) gelagert ist.

7. Fahrzeuglenkrad nach Anspruch 6, **dadurch gekennzeichnet, daß** das Gassackmodulgehäuse (23) eine äußere Abdeckkappe (7) mit einem seitlichen Fortsatz (48) hat, in dem das Lagerungsteil (47) ausgebildet ist.

8. Fahrzeuglenkrad nach Anspruch 7, **dadurch gekennzeichnet, daß** der Schalter (13) ein elektrisches Schaltglied (104) umfaßt, welches in einer Ausnehmung im Fortsatz (48) untergebracht ist und durch ein bewegliches Betätigungselement (14) schaltbar ist.

9. Fahrzeuglenkrad nach einem der vorhergehenden Ansprüche, **dadurch gekennzeichnet, daß** der Schalter (13) ein Hupenschalter ist.

10. Fahrzeuglenkrad nach Anspruch 9, **dadurch gekennzeichnet, daß** der Hupenschalter eine außenseitige Betätigungsfläche (15) hat, in die rückseitig das Führungsteil (49) unter Durchdringung des Lagerungsteils (47) eingeschraubt ist.

## Claims

1. A vehicle steering wheel, comprising
a switch (13) movably mounted on the steering wheel,
and a mounting for the switch, the mounting having a guide piece (49) and a mounting piece (47) that encloses the guide piece (49),
**characterized in that**
the guide piece (49) has a free end (53) with a cone widening outwards towards the free end (53) and transversely to the direction of motion (A) of the switch (13), the free end (53) forming an end stop in the non-actuated switch position and resting against the mounting piece (47).

2. The vehicle steering wheel according to Claim 1, **characterized in that** the mounting piece (47) has a conical contact surface for the conical end (53).

3. The vehicle steering wheel according to Claim 2, **characterized in that** the contact surface is of complementary design to the conical end (53).

4. The vehicle steering wheel according to any of the preceding Claims, **characterized in that** the mounting piece (47) has play transversely to the direction of motion (A) in relation to the conical end (53) when the switch (13) is actuated.

5. The vehicle steering wheel according to any of the preceding Claims, **characterized in that** the guide piece (49) has a thread at its end opposite to the conical end (53).

6. The vehicle steering wheel according to any of the preceding Claims, **characterized in that** the switch (13) is mounted on a gas bag module housing (23).

7. The vehicle steering wheel according to Claim 6, **characterized in that** the gas bag module housing (23) includes an outer covering cap (7) having a lateral extension (48) in which the mounting piece (47) is formed.

8. The vehicle steering wheel according to Claim 7, **characterized in that** the switch (13) comprises an electric switching member (104) which is accommodated in a recess in the extension (48) and is adapted to be switched by a movable actuating element (14).

9. The vehicle steering wheel according to any of the preceding Claims, **characterized in that** the switch (13) is a horn switch.

10. The vehicle steering wheel according to Claim 9, **characterized in that** the horn switch has an actuating surface (15) on the outside into the rear of which the guide piece (49) is screwed with penetration of the mounting piece (47).

## Revendications

1. Volant de véhicule, comportant
un commutateur (13) qui est monté mobile sur le volant,
et un palier pour le commutateur qui comprend une pièce de guidage (49) et une pièce de montage (47) entourant la pièce de guidage (49),
**caractérisé en ce que**
la pièce de guidage (49) possède une extrémité libre (53) avec un cône s'élargissant vers l'extérieur vers l'extrémité libre (53), transversalement à la direction de mouvement (A) du commutateur (13), l'extrémité libre (53) formant une butée d'extrémité dans la position non actionnée du commutateur et reposant contre la pièce de montage (47).

2. Volant selon la revendication 1, **caractérisé en ce que** la pièce de montage (47) possède une surface d'appui conique pour l'extrémité conique (53).

3. Volant selon la revendication 2, **caractérisé en ce que** la surface d'appui est complémentaire à l'extrémité conique (53).

4. Volant selon l'une des revendications précédentes, **caractérisé en ce que** la pièce de montage (47) présente transversalement à la direction de mouvement (A) du jeu par rapport à l'extrémité conique (53) lorsque le commutateur (13) est actionné.

5. Volant selon l'une des revendications précédentes, **caractérisé en ce que** la pièce de guidage (49) présente un pas de vis à son extrémité opposée à l'extrémité conique (53).

6. Volant selon l'une des revendications précédentes, **caractérisé en ce que** le commutateur (13) est monté sur un boîtier de module de coussin à gaz (23).

7. Volant selon la revendication 6, **caractérisé en ce que** le boîtier de module de coussin à gaz (23) possède un couvercle (7) extérieur avec un prolongement (48) latéral dans lequel est réalisée la pièce de montage (47).

8. Volant selon la revendication 7, **caractérisé en ce que** le commutateur (13) comprend un organe de commutation (104) électrique qui est logé dans un évidement dans le prolongement (48) et qui peut être commuté par un élément d'actionnement (14) mobile.

9. Volant selon l'une des revendications précédentes, **caractérisé en ce que** le commutateur (13) est un commutateur de klaxon.

10. Volant selon la revendication 9, **caractérisé en ce que** le commutateur de klaxon possède une surface d'actionnement (15) extérieure dans la face postérieure de laquelle la pièce de guidage (49) est vissée en traversant la pièce de montage (47).
